# EUROPEAN PATENT SPECIFICATION

(11) **EP 4 577 981 B1**
(45) Date of publication and mention of the grant of the patent: **15.04.2026**
(21) Application number: 23754293.1
(22) Date of filing: 08.08.2023
(51) Int. Cl.: G06T 7/20

(54) **EVENT-BASED IMAGING SYSTEM, METHOD AND SPIKING NEURAL NETWORK THEREFOR, TRAINING SYSTEM FOR CREATING SUCH A SPIKING NEURAL NETWORK, VEHICLE, DRONE, AND ROBOTIC SYSTEM**
EREIGNISBASIERTES BILDGEBUNGSSYSTEM, VERFAHREN UND NEURONALES SPIKING-NETZWERK DAFÜR, TRAININGSSYSTEM ZUR ERZEUGUNG EINES DERARTIGEN NEURONALEN SPIKING-NETZWERKS, FAHRZEUG, DROHNE UND ROBOTERSYSTEM
SYSTÈME D'IMAGERIE BASÉ SUR UN ÉVÉNEMENT, PROCÉDÉ ET RÉSEAU NEURONAL À IMPULSIONS ASSOCIÉ, SYSTÈME D'ENTRAÎNEMENT POUR CRÉER UN TEL RÉSEAU NEURONAL À IMPULSIONS, VÉHICULE, DRONE, ET SYSTÈME ROBOTIQUE

(30) Priority: 26.08.2022 EP 22192387
(43) Date of publication of application: 02.07.2025
(73) Proprietor: Sony Group Corporation, Tokyo 108-0075 (JP); Sony Europe B.V., Weybridge, Surrey KT13 0XW (GB)
(72) Inventor: BRESCIANINI, Dario, 70327 Stuttgart (DE); DÜRR, Peter, 70327 Stuttgart (DE); BI, Yin, 70327 Stuttgart (DE); KREISER, Raphaela, 70327 Stuttgart (DE)
(74) Representative: 2SPL Patentanwälte PartG mbB
(86) International application number: PCT/EP2023/071968
(87) International publication number: WO 2024/041884

(56) References cited:
- CHEN LIN ET AL: "Dynamical Conventional Neural Network Channel Pruning by Genetic Wavelet Channel Search for Image Classification", FRONTIERS IN COMPUTATIONAL NEUROSCIENCE, vol. 15, 27 October 2021 (2021-10-27), Lausanne, XP055937112, ISSN: 1662-5188, DOI: 10.3389/fncom.2021.760554
- LIU HONGJIE ET AL: "Combined frame- and event-based detection and tracking", 2016 IEEE INTERNATIONAL SYMPOSIUM ON CIRCUITS AND SYSTEMS (ISCAS), IEEE, 22 May 2016 (2016-05-22), pages 2511 - 2514, XP032942109, DOI: 10.1109/ISCAS.2016.7539103
- MOEYS DIEDERIK PAUL ET AL: "Steering a predator robot using a mixed frame/event-driven convolutional neural network", 2016 SECOND INTERNATIONAL CONFERENCE ON EVENT-BASED CONTROL, COMMUNICATION, AND SIGNAL PROCESSING (EBCCSP), IEEE, 13 June 2016 (2016-06-13), pages 1 - 8, XP032983182, DOI: 10.1109/EBCCSP.2016.7605233
- ZHU ALEX ET AL: "EV-FlowNet: Self-Supervised Optical Flow Estimation for Event-based Cameras", 13 August 2018 (2018-08-13), XP093098799, Retrieved from the Internet <URL:https://arxiv.org/abs/1802.06898> [retrieved on 20231107]

## Description

### Field

Embodiments of the present disclosure relate to an event-based imaging system, a method and spiking neural network therefor, a training system for creating such a spiking neural network, a vehicle, a drone, and a robotic system. In particular, but not exclusively, embodiments of the present disclosure relate to a concept of high-velocity prediction using an event-based imaging system.

### Background

Event-based imaging plays an increasingly important role in various fields of science and technology.

Detecting moving objects and estimating their velocity are applied in a multitude of applications including autonomous driving and drone control. High velocity estimation is particularly important in rapidly moving or changing systems. Drones may need to avoid dynamic obstacles during flight, and autonomous vehicles may need to be able to predict the motion traffic participants in their environment.

In practice, cameras may be used for detecting moving objects and estimating their velocity. In doing so, the velocity of an object may be obtained through detecting and tracking the object in multiple subsequent image frames. Such techniques may rely on accurate object position detections for measurement updates. This, e.g., is done by Convolutional Neural Networks (CNNs).

An update rate at which the velocity can be predicted, in practice, relies on a processing time of an object detection algorithm and a sensor measurement rate i.e., the framerate in the case of the sensor being a standard camera. Furthermore, by filtering position data, an additional delay is introduced.

CNNs may achieve sufficiently accurate velocity estimations but complex architectures significantly limit an inference time for predicting object velocities. In some applications, the inference time is in the order of milliseconds to tens of milliseconds. Conventional frame-based cameras are often limited to framerates in the order of hundreds of Hz due to high data rates which they produce. Also, an inference time (time for evaluating image data of cameras to obtain the velocity of the object) of CNNs may be insufficient for many applications.

LiDAR-based systems may achieve object detections at ~200fps. Recurrent Neural Networks directly learn motion information on sequential data and hence do not rely on filtering methods for velocity prediction. However, due to their complex architecture, prediction frequency is in the order of hundreds of Hz. Hence, LiDAR-based systems also do not provide a sufficient temporal resolution for many applications.

In some applications, a higher temporal resolution is desired in determining the velocity of objects.

Chen Lin et al: "Dynamical Conventional Neural Network Channel Pruning by Genetic Wavelet Channel Search for Image Classification" introduce a Genetic Wavelet Channel Search (GWCS) method for neural network channel pruning, optimizing deep CNNs for image classification. GWCS dynamically selects and prunes channels using genetic algorithms and wavelet-based fitness, outperforming state-of-the-art methods in accuracy and compression on CIFAR and ImageNet datasets.

There is a demand of an improved concept of velocity measurement/estimation.

This demand may be satisfied by the subject-matter of the appended independent and dependent claims.

### Summary

Embodiments of the present disclosure are based on the finding that parameters of an artificial neural network trained to determine the motion of objects can be transferred to a spiking neural network to combine an accuracy of the artificial neural network in determining the motion of objects with a temporal resolution of the spiking neural network. Another finding is that real-world observation of a reference sensor may be used for training the artificial neural network for a higher accuracy than using manually generated or simulated training data.

Embodiments of the present disclosure provide a method for an event-based imaging system. The method comprises obtaining event data of an object in the environment of the event-based imaging system using an event-based vision sensor (EVS) and obtaining motion data of the object using a reference sensor. Further, the method provides for applying the event data and the motion data for training an artificial neural network (ANN) to characterize and/or predict a motion of the object. The method also comprises creating, based on the trained ANN, a spiking neural network (SNN) configured to characterize and/or predict the motion of the object.

Using the reference sensor to generate the motion data from real-world observations removes the need for laborious manual generation or simulation of motion data and may yield a higher accuracy of the ANN and the SNN than manual or simulated input motion data for training the ANN.

As the skilled person having benefit from the present disclosure will appreciate, SNNs can provide faster processing rates than other ANNs while, on the other hand, other ANNs can be trained more efficiently and more accurate than SNNs. The ANN, e.g., may be any ANN that allows GPU (Graphics Processing Unit) training for a higher convergence and a higher accuracy in determining a velocity or other motion parameters of the object than SNNs. By creating the SNN based on the trained ANN, capabilities of the trained ANN may be transferred to the SNN. Thus, the SNN created based on the trained ANN combines the advantage of the higher accuracy of ANNs with higher processing rates of SNNs. Unlike other ANNs, the SNN, hence, may not only provide a sufficient accuracy in determining the motion of the object but also a sufficient temporal resolution (of a few microseconds, µs) for applications in rapidly changing systems.

The reference sensor may comprise or correspond to any imaging sensor. In some embodiments, the reference sensor comprises an RGB camera, a LiDAR sensor, a RADAR sensor, an infrared sensor, and/or an ultrasonic sensor.

For creating the SNN, an activation function of the ANN may be replaced by an activation function that integrates an input over time with a leakage term. In some embodiments, creating the SNN comprises replacing an activation function of the ANN with a leaky-integrate-and-fire (LIF) neuron or LIF activation function. The activation function, e.g., is a rectified linear unit (ReLU) or any other activation function (different from an LIF activation function). In practice, e.g., the activation function in the input layer of the ANN is replaced by the LIF neuron such that input indicative of the event data is fed to hidden layers of the SNN instantly with the temporal resolution or intrinsic latency of the LIF neuron. The temporal resolution, in practice, is approximately 1 µs or a few microseconds. In this way, (pixel) events are integrated by the LIF neuron and the SNN updates its outcome continuously with further event data within microseconds. Thus, a determination of the motion of objects may be accelerated.

In practice, creating the SNN may comprise implementing the SNN in a field programmable gate array (FPGA) or in neuromorphic hardware. As the skilled person will understand, due to parallelization, hardware-implemented neural networks allow shorter processing times than, e.g., purely software-implemented neural networks. Accordingly, implementing the SNN in the FPGA or neuromorphic hardware allows faster motion prediction/determination.

Optionally, obtaining the motion data comprises obtaining measurement data of the object from the reference sensor and obtaining the motion data using a Bayes filter and the measurement data as input to the Bayes filter. Filtering the motion data through the Bayes filter allows a more precise determination of the motion data and, thus, enhances the training of the ANN resulting in a higher accuracy of the SNN in determining the motion of objects.

Optionally, an outcome of the Bayes filter is filtered to further enhance the training of the ANN and the accuracy of the SNN. To this end, e.g., obtaining the motion data may further comprise obtaining motion samples by applying the Bayes filter to the measurement data, determining an uncertainty of the motion samples, and filtering the motion samples based on the uncertainty to obtain the motion data. Through filtering the motion samples based on the uncertainty, outliers that may worsen the training may be filtered out, thereby improving the training of the ANN. Additionally or alternatively, for better training data, trajectory samples of the object(s) can be determined using a motion model and motion samples, in particular velocity samples, may be derived from the trajectory samples.

In some embodiments, the uncertainty of the motion samples is represented by a Mahalanobis distance of the motion samples, and wherein filtering the motion samples comprises filtering out motion samples having a Mahalanobis distance which is greater than a predefined threshold.

To further improve the SNN it can be further trained as the event-based imaging operates. For this, the method may further comprise obtaining further event data using the EVS, obtaining further motion data using the reference sensor, providing the event data and the motion data to the SNN, and training the SNN based on the further event data and the further motion data provided to the SNN. In this way, the SNN is further adapted for an even more accurate determination/prediction of the motion of objects.

In doing so, training the SNN, e.g., comprises training the SNN using spike-timing dependent backpropagation (STDB).

Further embodiments of the present disclosure provide an SNN obtained by the method proposed herein.

According to what was explained in connection with the proposed method, the SNN may be implemented in an FPGA or in neuromorphic hardware to provide a higher temporal resolution than software-based/CPU- or GPU-based implementations.

As well, embodiments of the present disclosure provide an event-based imaging system for characterizing and/or predicting a motion of an object in the environment of the event-based imaging system. The event-based imaging system comprises an EVS configured to provide event data of the object in the environment of the event-based imaging system and the proposed SNN for characterizing and/or predicting the motion of the object based on the event data.

As explained above, the use of the reference sensor to generate the motion data from real-world observations, on one hand, removes the need for laborious manual generation or simulation of motion data and, on the other hand, may yield a higher accuracy in determining the motion of objects of the ANN and the SNN than manually or simulated input motion data for training the ANN.

In practice, the SNN may comprise multiple layers including an input layer which is configured to receive the event data and provide output indicative of the event data to another layer as the event data is received in order to process the event data faster than other ANNs. In embodiments, the input layer, e.g., is configured to provide the output indicative of the event data to another layer immediately as the input layer receives the event data. To this end, the input layer, e.g., comprises LIF neurons.

To process the event data even faster, the EVS, in practice, may process the event data according to the Address Event Representation (AER) protocol to provide the event data to the SNN and the SNN is configured to process the event data according to the AER protocol for characterizing and/or predicting the motion of the object. In this way, the amount of data to be communicated for characterizing and/or predicting the motion of objects may be reduced for a lower resource consumption and shorter processing times.

As mentioned above, the SNN may be trained as well. For this, the event-based imaging system further comprises a reference sensor for training the SNN. According to this, the event-based imaging system may be equipped with at least two types of sensors, the EVS and an arbitrary kind of reference sensor. Such a setup of the event-based imaging system, hence, may be referred to as "dual setup".

Further embodiments of the present disclosure provide a training system for creating an SNN configured to characterize and/or predict a motion of an object in the environment of an event-based imaging system. According to what is described in connection with the proposed method, the training system comprises an EVS configured to provide event data of the object in the environment of the event-based imaging system and a reference sensor configured to provide motion data of the object. Also, the training system comprises an ANN configured for training the ANN to characterize and/or predict the motion of the object based on the event data and the motion data and for creating, based on the ANN, the SNN for characterizing and/or predicting the motion of the object.

In embodiments, the reference sensor can be of any kind of sensor. In some embodiments, the reference sensor comprises a RGB camera, a LiDAR sensor, a RADAR sensor, an infrared sensor, and/or an ultrasonic sensor.

Other embodiments provide a vehicle, a drone, or a robotic system comprising the event-based imaging system proposed herein.

### Brief description of the Figures

Some examples of apparatuses and/or methods will be described in the following by way of example only, and with reference to the accompanying figures, in which
Fig. 1 shows a flow chart schematically illustrating an embodiment of a method for an event-based imaging system;
Fig. 2 shows a block diagram schematically illustrating an embodiment of a training system for creating a spiking neural network, SNN, configured to characterize and/or predict a motion of an object in the environment of an event-based imaging system;
Fig. 3 shows a block diagram schematically illustrating another embodiment of the training system;
Fig. 4 schematically shows functional principles of an ANN and an SNN according to the proposed concept;
Fig. 5 shows a block diagram schematically illustrating an embodiment of event-based imaging system proposed herein;
Fig. 6 shows a block diagram schematically illustrating another embodiment of the event-based imaging system; and
Fig. 7 shows a block diagram schematically illustrating exemplary applications of the proposed event-based imaging system.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

As mentioned above, so far, motion measurement systems provide an insufficient temporal resolution for applications in rapidly changing systems, e.g., in drones or automotive applications.

In practice, systems using RGB cameras need to process high data rates and, thus, fail to provide a sufficient temporal resolution for motion measurements, in particular, high-velocity measurements. One idea of the present disclosure is to use an EVS which has a better temporal resolution than RGB cameras of approximately 1 µs or a few microseconds (up to 10 µs). Such an EVS asynchronously detects changes of brightness at pixel level and generates event data indicative of such brightness changes. The event data may comprise timestamped pixel events tagged with a polarity i.e., "ON" and "OFF" according to the direction of brightness change, wherein "ON" indicates a brightness increase and "OFF" indicates a brightness decrease. So, event data is sparser than RGB frames which allows faster processing than in systems using RGB cameras.

One challenge in the application of the EVS is to provide suitable means for determining the motion from the event data. Due to the different data representations, conventional algorithms that are used to process grayscale or RGB frames show insufficient performance/accuracy for event data.

One objective of the present disclosure, therefore, is to provide improved means, in particular processing means, for determining the motion of objects from event data of an EVS. In particular, an objective of this invention is to provide a hardware system that enables one-shot, high frequency velocity prediction of moving targets using an event camera and an FPGA.

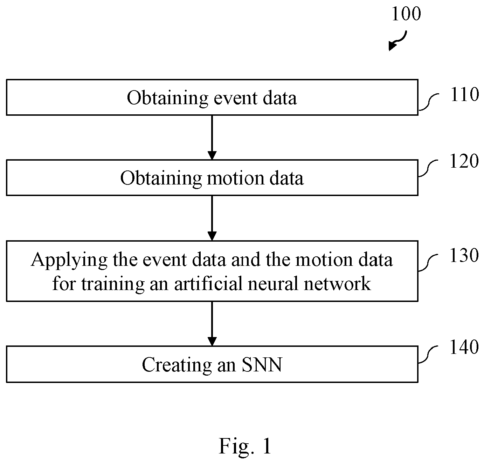

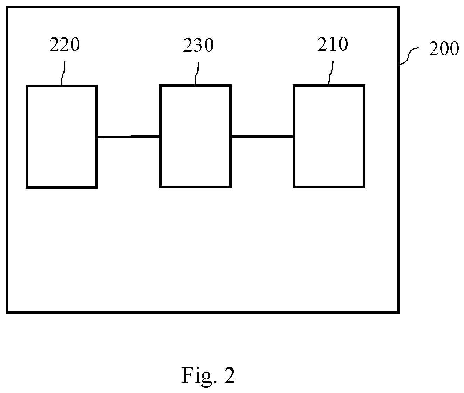

Fig. 1 shows a flow chart schematically illustrating an embodiment of a method 100 for an event-based imaging system and Fig. 2 shows a block diagram schematically illustrating an embodiment of a training system 200 configured to apply method 100. Aspects and features are now described in more detail below with reference to the proposed method 100 and training system 200.

As can be seen from the flow chart, method 100 comprises obtaining 110 event data of an object in the environment of the event-based imaging system using an EVS. The training system 200, accordingly, comprises an EVS 210 configured to provide the event data of the object in the environment of the event-based imaging system. The EVS 210, also called "neuromorphic camera, event camera, silicon retina, or dynamic vision sensor, includes an imaging sensor that is configured to respond to local changes in brightness. Accordingly, the event data is indicative of brightness changes measured by pixels of the EVS 210.

Pixels of the EVS 210 may independently respond to changes in brightness as they occur. Each pixel may store a reference brightness level, and continuously compare it to the current brightness level. If a difference in brightness exceeds a threshold, that pixel resets its reference level and generates an event: a discrete packet that contains an address of the pixel and a timestamp. Events may also contain the polarity (increase or decrease) of a brightness change, or an instantaneous measurement of the illumination level. Thus, the event data may include an asynchronous stream of events triggered by changes in scene illumination and may be indicative of the polarity, the address, and the timestamp.

Any (reflective) object can cause such changes in brightness. So, the object may be any (arbitrary) object. In order to train the event-based imaging system to determine the motion of object, the object may be a moving object. In embodiments, the object may be a target which is characteristic of an application of the event-based imaging system. For automotive applications, the object, e.g., may be any traffic participant, infrastructure object, or an appropriate training surrogate for traffic participants or infrastructure objects. For applications in drones, the object may be an aircraft or an appropriate training surrogate for aircrafts.

Further, method 100 provides for obtaining 120 motion data of the object using a reference sensor. Accordingly, the training system 200 further comprises such a reference sensor 220 configured to provide the motion data of the object. The reference sensor 220, e.g., is or comprises an RGB camera, a LiDAR sensor, a RADAR sensor, an infrared sensor, an ultrasonic sensor, and/or the like. In some embodiments, the reference sensor may also comprise a combination of such sensors or another kind of sensor. In embodiments, the motion data may include any kind of information on the motion of the object. Examples of the motion data comprise information on a velocity/speed, on a direction of movement, on a rotation, and/or on an acceleration of the object.

For obtaining the motion data, measurement data from the reference sensor 220 may be processed appropriately. In practice, the measurement data, e.g., comprises images or frames captured by the RGB camera and/or point clouds from the LiDAR sensor. Accordingly, object detection and object tracking may be applied to determine the motion data from positional changes of the object in subsequent images/frames and/or point clouds. To this end, e.g., appropriate computer vision (CV) algorithms may be applied to the images/frames and/or point clouds.

Spiking Neural Networks (SNNs) asynchronously process binary and sparse events as they arrive. Inference time is limited to the processor, but hardware can be optimized to leverage the sparse and binary nature of the SNN activations. Custom hardware implements SNNs in its underlying circuits and massively parallel neural computation accelerates the processing time. One idea of the present disclosure is therefore to apply an SNN for determining/predicting the motion of objects based on event data from the EVS. However, training an SNN introduces another dimension, i.e., time. Therefore, training an SNN requires more memory. It also requires "surrogate functions" to overcome the "non-differentiability" of a "spike". Training the SNN "directly", therefore, is avoided. The present disclosure, however, provides an easier way of providing an appropriate SNN for determining/predicting the motion of objects from event data of EVSs.

For this, method 100 comprises applying 130 the event data and the motion data for training an (ANN) to characterize and/or predict a motion of the object. Examples of the training system 200, therefore, further comprise an ANN 230 configured for training the ANN to characterize and/or predict the motion of the object based on the event data and the motion data and for creating, based on the ANN, the SNN for characterizing and/or predicting the motion of the object. For training the ANN 230, training data including pairs of chronologically matching samples of the event data and the motion data may be generated, wherein the event data serves as ground truth for training the ANN 230 to characterize and/or predict the motion of the object and/or any other objects based on event data from the EVS 210. In embodiments, the event data may be accumulated over a period that is equivalent to a duration to determine the motion data. Accumulating event data, e.g., includes summing up pixel events. In doing so, two channels may be used, wherein a first channel only accumulates positive brightness changes ("ON") and a second channel only accumulates negative brightness changes ("OFF"). As a result, a first image is generated based on the positive brightness changes and a second image is generated based on the negative brightness changes. Optionally, pixel event may be weighted and a weighted sum of the pixel events is determined. In doing so, e.g., the most recent event is assigned to the highest weight and the oldest event to the lowest weight (over an accumulation period).

In practice, the RGB camera may operate at 100 Hz such that event data, e.g., is accumulated over 0.01 s (in other applications, other frame rates/times are possible) and then associated with a respective frame of the RGB camera. The respective frame, e.g., is the one that is recorded while the event data was accumulated or right after the event data was accumulated. The ANN 230, e.g., may be implemented in software and/or hardware of the trainings system 200. For training the ANN 230, e.g., supervised learning may be applied.

In some applications, it is particularly desired that the event-based imaging system is able to detect (high) velocities of objects. Accordingly, the motion data may be indicative of the velocity of the object and the ANN 230 may be particularly trained to determine velocities of objects based on event data from the EVS 210.

In practice, the proposed approach may be applied for a plurality of objects and different kinds of objects for a higher robustness of the trained ANN 230.

In order to establish an SNN according to the aforementioned idea, method 100 provides for creating 140, based on the trained ANN 230, an SNN configured to characterize and/or predict the motion of the object to transfer the ANN's capabilities of determining the motion of objects to the SNN. For this, a structure/architecture and weights of the ANN may be transferred to the SNN. So, the SNN may be created such that it exhibits the same weights and structure apart from SNN-specific structural peculiarities. The SNN, e.g., comprises the same number of layers with the same number of neurons and the same neuron connections exhibiting the same weights as the ANN.

One idea of SNNs is that neurons in the SNN do not transmit information at each propagation cycle (as it happens with other multi-layer perceptron networks, e.g., the ANN), but rather transmit information asynchronously when a membrane potential - an intrinsic quality of the neuron related to its membrane electrical charge - reaches a specific value, called a "threshold". When the membrane potential of a neuron reaches the threshold, the neuron fires, and generates a signal that travels to other neurons which, in turn, increase or decrease their potentials in response to this signal. A neuron model that fires at the moment of threshold crossing is also called a spiking neuron model. Accordingly, such spiking neuron model is implemented in the SNN together with the capabilities of the trained ANN. Thereby, the SNN is configured to process the asynchronous stream of events in the event data asynchronously "in real-time" which provides faster processing of events than in other multi-layer perceptron networks which process data in predefined propagation cycles of several milliseconds.

Hence, the proposed approach allows determination and/or prediction of the motion, in particular the velocity, of (moving) objects in real-time at the event rate and rates exceeding tens of kHz, and without the need of a prior motion model, e.g., that is used by the filter. Also, the motion data from real-world observations using the reference data may provide a higher accuracy than a manually generated or a simulated ground truth.

An exemplary spiking neuron model is the leaky-integrate-and-fire (LIF) model. Accordingly, creating 140 the SNN may comprise replacing an activation function of the ANN with an LIF neuron/activation function. In doing so, in practice, the activation function of neurons of an input layer may be replaced by an activation function according to the LIF model.

In the leaky integrate-and-fire model/activation function, a momentary activation level (modeled as a differential equation) is considered to be the neuron's state, with incoming spikes pushing this value higher or lower, until the state eventually either decays, with a certain amount of current leaking through to the next layer, or - if the firing threshold is reached - the neuron fires. After firing the state variable is reset to a lower value.

In embodiments, the SNN may be implemented in hardware mimicking the structure/architecture and characteristics (neuron connections, weights) of the SNN to enable higher processing rates than software-implemented neural networks. Examples of suitable hardware comprise neuromorphic hardware and FPGAs. Accordingly, creating 140 the SNN may comprise implementing the SNN in a field programmable gate array, FPGA or in neuromorphic hardware. In doing so, the SNN may be established through programmable logic blocks, application-specific integrated circuits (ASICs), and/or the like. The skilled person will appreciate that the hardware may be digital, analog and/or a combination thereof.

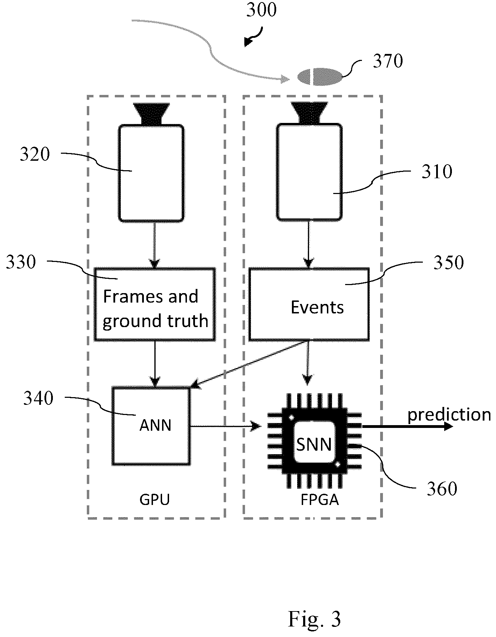

Further aspects and features of the proposed approach are explained in more detail below with reference to Fig. 3 schematically illustrating an exemplary embodiment 300 of the training system 200.

As can be seen from the block diagram in Fig. 3, the training system 300 comprises an EVS 310 as well as an RGB camera 320 which is configured to generate event data 350 indicative of an object 370, particularly, its motion.

Further, the training system 300 comprises an ANN 340 which shall be trained to detect and predict the velocity of moving objects using input from the EVS 310 or any equivalent event camera. For training the ANN 340, motion data/ground truth 330 of training data is obtained using the RGB camera 320. For this, CV techniques may be applied to frames of the RGB camera 320 running at a frequency (in the range) of 100Hz. CV techniques, e.g., detect colour, shape, and/or appearance of the object 370 to estimate the position of object 370 which is then tracked using a filter in order to determine the velocity or velocities of object 370. In doing so, e.g., the position is filtered through a motion model and the object's velocities can be obtained as ground truth 330 of training data. For filtering the position through the motion model, e.g., a Kalman filter or any other Bayes filter may be applied.

To avoid or obviate that the ground truth 330 is indicative of falsely detected objects or false assumptions on the motion model and its current parameters, only velocities (motion samples) with acceptable uncertainties may be selected for the ground truth 330. In order to do so, e.g., the Mahalanobis distance of velocities is determined and (only) velocities with a Mahalanobis distance that is lower than a predefined threshold are selected for the ground truth 330.

In this way, the ground truth 330 may be generated with the (frame-) rate of the RGB camera 320. The (frame-) rate, e.g., is 100 Hz which is lower than a rate at which events are detected by the EVS 310. The RGB camera 320 together with the Kalman filter, hence, may be referred to as "low-frequency reference system".

According to the proposed approach the low-frequency reference system is used to train/create a "high-frequency inference system" configured to determine/predict the velocity or other motion parameters of objects faster. In doing so, chronologically matching velocities of the ground truth and samples of the event data are grouped in pairs and used as training data to train the ANN 340 to characterize and/or predict the velocity of objects.

Then, the ANN 340 is converted into an SNN 360 by transferring the trained capabilities of determining the motion of objects from the ANN 340 to the SNN 360. To this end, ReLU activations/functions of neurons in an input layer are exchanged with LIF neurons. The SNN 360 may be implemented in an FPGA and efficient spike-based communication may be established.

The SNN 360, then, may be applied for predictions of velocities of moving objects, e.g., object 370.

As outlined above in more detail, the SNN 360 allows to determine the motion, e.g., velocities of moving objects at a higher rate, i.e., with a higher temporal resolution, than the ANN 340 which may operate at the frame rate of the RGB camera (100 Hz). The EVS 310 together with the SNN 360, hence, may be referred to as "high-frequency inference system".

The high-frequency inference system may achieve a temporal resolution of 1 µs or a few microseconds and, thus, meet the demands on the temporal resolution of applications in rapidly changing systems, e.g., in drones or automotive applications.

As the skilled person having benefit from the present disclosure will appreciate that, even if the shown example mainly deals with the prediction of object velocities, the proposed approach may be also applied for the determination of (current) velocities as well as for the determination and/or prediction of other motion parameters, e.g., acceleration, rotation, and/or the like. The skilled person will also understand that the SNN 340 can be established in various ways, e.g., using different programming and manufacturing means and techniques to transfer the capabilities of the ANN 340 to the SNN 360. As well, the skilled person will appreciate that the proposed approach also applies to various types or combinations of sensors as reference sensor and is not limited to RGB cameras.

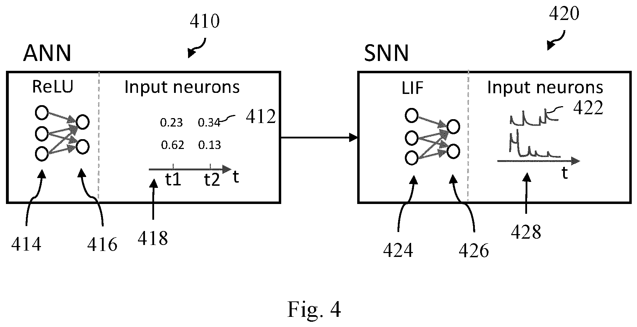

Further details regarding the creation of the SNN 360 are explained in more detail below with reference to Fig. 4 schematically showing functional principles of the ANN 340 and the SNN 360.

Fig. 4 shows a diagram 410 schematically illustrating the functional principles of the ANN 340 and another diagram 420 schematically illustrating the functional principles of the SNN 360.

On the left hand side of the diagrams 410 and 420, schematically a simplified structure of the ANN 340 (diagram 410) and the SNN 360 (diagram 420) is depicted. As can be seen from the diagrams 410 and 420, it is proposed that the ANN 340 and the SNN 360 exhibit the same architecture/structure of interconnected neurons forming an input layer 414/424 and another layer 416/426, e.g., a hidden layer of the ANN/SNN. In other words, the layers and their connections, here, e.g., the layers 424 and 426 as well as their connections between neurons of the layers 424 and 426 correspond to the structure, i.e., the layers 414 and 416 and their connections between neurons, of the ANN 340. As well, weights of the neurons of the ANN 340 and the SNN 360 may correspond.

Apart from that, ReLU activations of the ANN 340 in the input layer 414 are exchanged with LIF activations in the input layer 424 that integrate input over time with a leakage term (like an RC circuit).

On the right hand side of the diagrams 410 and 420 an exemplary output of the input layers 414 and 424 is shown. As can be seen from a comparison of output 412 of input layer 414 and output 422 input layer 424 plotted over time (see abscissae 418 and 428), pixel events from the EVS, are no longer accumulated but fed to other layers (layer 426) of the SNN 360 as they occur (at temporal resolution of 1 µs), while output 412 is provided in predefined cycles at times t1 and t2. In practice, those cycles take a few milliseconds which leads to a temporal resolution that is insufficient for many applications in rapidly changing systems.

The skilled person will appreciate that the LIF neurons of the input layer integrate pixel events in the event data and the SNN 360 continuously updates its characterization and/or prediction of the velocity (or other motion parameters) with every detected event within microseconds, so, nearly in real time.

In hardware implementations of the SNN, such an efficiency and low latency/high temporal resolution may be achieved through two key advantages:
1) Compared to other ANNs, neurons in SNNs may not provide the same precision as neurons in ANNs but only carry one bit of information which may lead to higher processing rates than in other ANNs.
2) Zero values are not communicated according to the Address Event Representation (AER) communication protocol. So, in practice, only non-zero values are communicated, e.g., through dense vectors that carry an index of neurons with non-zero values, e.g., of neurons of the input layer that receive detected events. In this way, an amount of data to be processed is reduced for a higher efficiency and temporal resolution/processing rates (lower latency).

EVS 310 may use the same AER protocol, in order that, like in 2), a sparsity of active events leads to a smaller amount of data to be transferred and processed.

It is further proposed that the SNN 360, optionally, is further trained using the reference sensor (RGB camera 320) and the EVS (EVS 310). To this end, e.g., further event data may be obtained using the EVS 310 and further motion data may be obtained using the RGB camera 320. The SNN 360, then, may be further trained based on the further event data and the further motion data. In doing so, weights of the SNN 360 may be further adapted. To this end, e.g., STDB may be applied. In some embodiments, this may be done during the application of the SNN 360 to adapt the SNN 360 to a specific use case or circumstances of the application. Alternatively, this may be also done before use/the application.

As the skilled person will appreciate, the SNN 360 may be not only compatible with EVS 310 but also with other similar or equivalent EVS. It is therefore understood that the SNN 360 may be either used together with the EVS 310 or with another EVS.

So, embodiments of the present disclosure may provide an SNN obtained by the method and/or the training system proposed herein. As outlined in connection with the proposed method/training system, such an SNN, e.g., is implemented in an FPGA or in neuromorphic hardware.

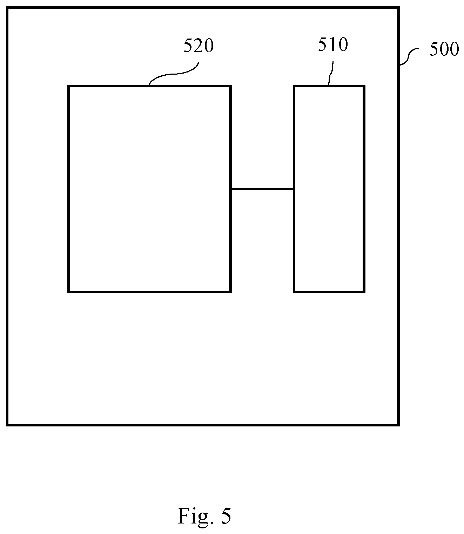

In practice, the SNN may be deployed in an event-based imaging system. Exemplary applications of the SNN are described in more detail below with reference to Fig. 5 which shows a block diagram schematically illustrating an embodiment of the event-based imaging system 500 according to the present disclosure.

The event-based imaging system, e.g., is configured for characterizing and/or predicting a motion of an object in the environment of the event-based imaging system and comprises an EVS 510 configured to provide event data of an object in the environment of the event-based imaging system and an SNN 520 according to the present disclosure for characterizing and/or predicting the motion of the object based on the event data.

As outlined in connection with the method and training system for creating such an SNN, the SNN 520 provides a higher temporal resolution than other ANNs and, thus, allows applications of the event-based imaging system in rapidly changing systems such as drones, robotic systems, or automotive applications.

For this, an input layer of the SNN 520 may be configured to receive the event data and provide output(s) indicative of the event data to another layer immediately - apart from an intrinsic latency of a neuron in the SNN 520 - as the input layer receives the event data. In embodiments, the intrinsic latency may be a one or a few microseconds. So, the input layer may be configured to provide the output within less than 1.5 µs or a few microseconds after receiving the event data.

For the sake of sparsity of data to be processed for characterizing and/or predicting the motion of objects, the EVS 520 may be configured to process the event data according to the AER protocol to provide the event data to the SNN which, in turn, may be configured to process the event data as well according to the AER protocol for characterizing and/or predicting the motion of the object. In doing so, the event data only comprises an address of a pixel detecting an event and a timestamp of the event. Analogously, the output of neurons, e.g., only comprises values and an index of a respective neuron. The thus achieved sparsity allows faster processing rates than other less sparse data.

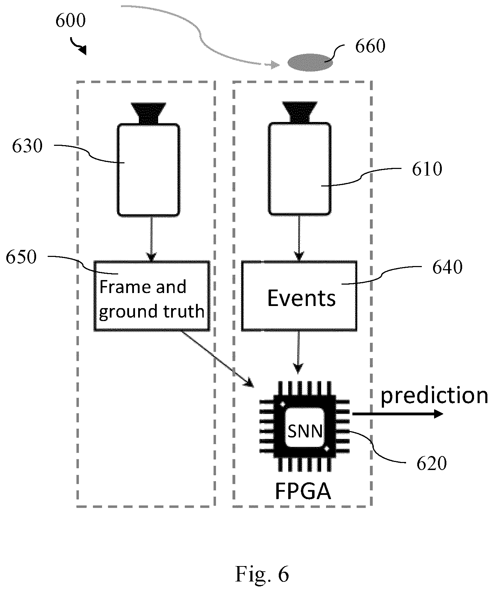

Fig. 6 shows a block diagram schematically illustrating another embodiment 600 of the event-based imaging system.

As can be seen from the block diagram, in addition to an EVS 610 and an SNN 620 as proposed herein, the event-based imaging system may further comprise a reference sensor, e.g., an RGB camera 630, for (further) training the SNN 620. The reference sensor can be any sensor configured to provide motion data of an object in the environment of the event-based imaging system in order to train the SNN 520 using event data from the EVS 510 and motion data of the reference sensor as training data, wherein the motion data may serve as ground truth and STDB may be applied for training the SNN 520.

In use cases, where the training system (e.g., training system 200 or 300) is also used as event-based imaging system, such a setup, also referred to as "dual setup", e.g., is achieved when the RGB camera (e.g., RGB camera 320) is not removed after initial training, or by using a camera that captures both frames, and events. Such a setup particularly allows continuous training of the SNN 620 on further observations of the EVS 610 and the RGB camera 630. For this, e.g., an object 660 is recorded by the EVS 610 and the RGB camera 630 to generate further motion data 650 and further event data 640 and the further motion and event data 640 and 650 is used as training data for training the SNN 620. To this end, e.g., the motion data serving as ground truth may be obtained as described in connection with the training of the ANN. For training the SNN 620, weights of the SNN 620 may be updated using STDB, wherein weight updates may be proportional to a difference in spike timing between the current time and the most recent timestamp of a spike of a respective neuron. In this way, the SNN 620 can learn to predict the velocities of new objects in real-time and optimize its predictions as the environment changes.

The event-based imaging system may also apply and benefit from the AER communication protocol and the inherent sparsity of each processing scheme. Hence, lower power consumption and lower latency may be achieved than in other tracking systems. The LIF activation function in the input layer of the SNN integrates the pixel events from the EVS 610. Pixel events may arrive at a temporal resolution of 1µs and the SNN 610 may update its predictions accordingly with new pixel event.

The proposed event-based imaging system may be deployed in various applications including applications in drones, robotic systems, and vehicles.

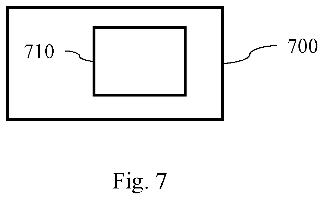

Embodiments of the present disclosure, therefore, may provide a vehicle, a drone, or a robotic system comprising the event-based imaging system proposed herein (e.g., event-based imaging system 500 or 600), as explained in more detail below with reference to Fig. 7.

Fig. 7 shows a block diagram schematically illustrating exemplary applications of the proposed event-based imaging system.

As can be seen from the block diagram, an event-based imaging system 710 according to the present disclosure may be installed in a device 700. The skilled person having benefit from the present disclosure will appreciate that the device 700 may be any kind of device. In embodiments, the device is a vehicle, a drone, or a robotic system.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims define the invention.

## Claims

1. A method (100) for an event-based imaging system (500, 600, 710), the method comprising:
obtaining (110) event data (350, 640) of an object (370, 660) in the environment of the event-based imaging system (500, 600, 710) using an event-based vision sensor, EVS (210, 310, 510, 610);
obtaining (120) motion data (330, 650) of the object (370, 660) using a reference sensor (220, 320, 630);
**characterized in that** the method further comprises
applying (130) the event data (350, 640) and the motion data (330, 650) for training an artificial neural network, ANN (230, 340), to characterize and/or predict a motion of the object (370, 660); and
creating (140), based on the trained ANN (230, 340), a spiking neural network, SNN (360, 520, 620), configured to characterize and/or predict the motion of the object (370, 660).

2. The method (100) of claim 1, wherein the reference sensor (220, 320, 630) comprises an RGB camera (320, 630), a LiDAR sensor, a RADAR sensor, an infrared sensor, and/or an ultrasonic sensor.

3. The method (100) of claim 1 or 2, wherein creating (140) the SNN (360, 520, 620) comprises replacing an activation function of the ANN (230, 340) with a leaky-integrate-and-fire, LIF, neuron.

4. The method (100) of any preceding claim, wherein creating (140) the SNN (360, 520, 620) comprises implementing the SNN (360, 520, 620) in a field programmable gate array, FPGA or in neuromorphic hardware.

5. The method (100) of any preceding claim, wherein obtaining (120) the motion data (330, 650) comprises:
obtaining measurement data of the object (370, 660) from the reference sensor (220, 320, 630); and
obtaining the motion data (330, 650) using a Bayes filter and the measurement data as input to the Bayes filter.

6. The method (100) of claim 5, wherein obtaining (120) the motion data (330, 650) further comprises:
obtaining motion samples by applying the Bayes filter to the measurement data;
determining an uncertainty of the motion samples; and
filtering the motion samples based on the uncertainty to obtain the motion data (330, 650).

7. The method (100) of claim 6, wherein the uncertainty of the motion samples is represented by a Mahalanobis distance of the motion samples, and wherein filtering the motion samples comprises filtering out motion samples having a Mahalanobis distance which is greater than a predefined threshold.

8. The method (100) of any preceding claim, wherein the method further comprises:
obtaining further event data (640) using the EVS (610);
obtaining further motion data (650) using the reference sensor (630);
providing the event data (640) and the motion data (650) to the SNN (620); and
training the SNN (620) based on the further event data (640) and the further motion data (650) provided to the SNN (620).

9. The method (100) of claim 8, wherein training the SNN (620) comprises training the SNN using spike-timing dependent backpropagation, STDB.

10. A spiking neural network, SNN (360, 520, 620), obtained by the method (100) of any one of the preceding claims.

11. The SNN (360, 520, 620) of claim 10, wherein the SNN is implemented in a field programmable array, FPGA or in neuromorphic hardware.

12. An event-based imaging system (500, 600, 710) for characterizing and/or predicting a motion of an object (370, 660) in the environment of the event-based imaging system (500, 600, 710), the event-based imaging system (500, 600, 710) comprising:
an event-based vision sensor, EVS (210, 310, 510, 610), configured to provide event data (350, 640) of the object (370, 660) in the environment of the event-based imaging system (500, 600, 710); and
the spiking neural network, SNN (360, 520, 620), of claim 10 or 11 for characterizing and/or predicting the motion of the object (370, 660) based on the event data (350, 640).

13. The event-based imaging system (500, 600, 710) of claim 12, wherein the SNN (360, 520, 620) comprises multiple layers including an input layer (424) which is configured to:
receive the event data (350, 640); and
provide output indicative of the event data (350, 640) to another layer (426) immediately as the input layer (424) receives the event data (350, 640).

14. The event-based imaging system (500, 600, 710) of claim 12 or 13, wherein the EVS (210, 310, 510, 610) is configured to process the event data (350, 640) according to the Address Event Representation, AER, protocol to provide the event data (350, 640) to the SNN (360, 520, 620), and wherein the SNN (360, 520, 620) is configured to process the event data (350, 640) according to the AER protocol for characterizing and/or predicting the motion of the object (370, 660).

15. The event-based imaging system (600) of any of claims 12 to 14, wherein the event-based imaging system (600) further comprises a reference sensor (630) for training the SNN (620).

16. A training system (200, 300) for creating a spiking neural network, SNN (360, 520, 620), configured to characterize and/or predict a motion of an object (370, 660) in the environment of an event-based imaging system (500, 600, 710), the training system (200, 300) comprising:
an event-based vision sensor, EVS (210, 310, 510, 610), configured to provide event data (350, 640) of the object (370, 660) in the environment of the event-based imaging system (500, 600, 710);
a reference sensor (220, 320, 630) configured to provide motion data (330, 650) of the object (370, 660);
**characterized in that** the system further comprises:
an artificial neural network, ANN (230, 340), configured for training the ANN (230, 340) to characterize and/or predict the motion of the object (370, 660) based on the event data (350, 640) and the motion data (330, 650) and for creating, based on the ANN (230, 340), the SNN (360, 520, 620) for characterizing and/or predicting the motion of the object (370, 660).

17. The training system (200, 300) of claim 16, wherein the reference sensor (220, 320, 630) comprises an RGB camera (320, 630), a LiDAR sensor, a RADAR sensor, an infrared sensor, and/or an ultrasonic sensor.

18. A vehicle, a drone, or a robotic system (700) comprising the event-based imaging system (710) of any of claims 12 to 15.

## Patentansprüche

1. Verfahren (100) für ein ereignisbasiertes Bildgebungssystem (500, 600, 710), das Verfahren umfassend:
Erhalten (110) von Ereignisdaten (350, 640) eines Objekts (370, 660) in der Umgebung des ereignisbasierten Bildgebungssystems (500, 600, 710) unter Verwendung eines ereignisbasierten Sichtsensors, EVS (210, 310, 510, 610);
Erhalten (120) von Bewegungsdaten (330, 650) des Objekts (370, 660) unter Verwendung eines Referenzsensors (220, 320, 630);
**dadurch gekennzeichnet, dass** das Verfahren ferner Folgendes umfasst: Anwenden (130) der Ereignisdaten (350, 640) und der Bewegungsdaten (330, 650) zum Trainieren eines künstlichen neuronalen Netzwerks, ANN (230, 340), um eine Bewegung des Objekts (370, 660) zu charakterisieren und/oder vorherzusagen; und
Erstellen (140), basierend auf dem trainierten ANN (230, 340), eines spikenden neuronalen Netzwerks, SNN (360, 520, 620), das konfiguriert ist, um die Bewegung des Objekts (370, 660) zu charakterisieren und/oder vorherzusagen.

2. Verfahren (100) nach Anspruch 1, wobei der Referenzsensor (220, 320, 630) eine RGB-Kamera (320, 630), einen LiDAR-Sensor, einen RADAR-Sensor, einen Infrarotsensor und/oder einen Ultraschallsensor umfasst.

3. Verfahren (100) nach Anspruch 1 oder 2, wobei das Erstellen (140) des SNN (360, 520, 620) das Ersetzen einer Aktivierungsfunktion des ANN (230, 340) durch ein Leaky-Integrate-and-Fire-, LIF-, Neuron umfasst.

4. Verfahren (100) nach einem der vorstehenden Ansprüche, wobei das Erstellen (140) des SNN (360, 520, 620) das Implementieren des SNN (360, 520, 620) in einem feldprogrammierbaren Gatearray, FPGA oder in neuromorpher Hardware umfasst.

5. Verfahren (100) nach einem der vorstehenden Ansprüche, wobei das Erhalten (120) der Bewegungsdaten (330, 650) Folgendes umfasst:
Erhalten von Messdaten des Objekts (370, 660) von dem Referenzsensor (220, 320, 630); und
Erhalten der Bewegungsdaten (330, 650) unter Verwendung eines Bayes-Filters und der Messdaten als Eingabe in den Bayes-Filter.

6. Verfahren (100) nach Anspruch 5, wobei das Erhalten (120) der Bewegungsdaten (330, 650) ferner Folgendes umfasst:
Erhalten von Bewegungsproben durch Anwenden des Bayes-Filters auf die Messdaten;
Bestimmen einer Unsicherheit der Bewegungsproben; und
Filtern der Bewegungsproben basierend auf der Unsicherheit, um die Bewegungsdaten (330, 650) zu erhalten.

7. Verfahren (100) nach Anspruch 6, wobei die Unsicherheit der Bewegungsproben durch einen Mahalanobis-Abstand der Bewegungsproben dargestellt wird, und wobei das Filtern der Bewegungsproben das Herausfiltern von Bewegungsproben umfasst, die einen Mahalanobis-Abstand aufweisen, der größer als ein vordefinierter Schwellenwert ist.

8. Verfahren (100) nach einem der vorstehenden Ansprüche, wobei das Verfahren ferner Folgendes umfasst:
Erhalten weiterer Ereignisdaten (640) unter Verwendung des EVS (610);
Erhalten weiterer Bewegungsdaten (650) unter Verwendung des Referenzsensors (630);
Bereitstellen der Ereignisdaten (640) und der Bewegungsdaten (650) an das SNN (620); und
Trainieren des SNN (620) basierend auf den weiteren Ereignisdaten (640) und den weiteren Bewegungsdaten (650), die dem SNN (620) bereitgestellt werden.

9. Verfahren (100) nach Anspruch 8, wobei das Trainieren des SNN (620) das Trainieren des SNN unter Verwendung von Spike-Timing-Dependent-Backpropagation, STDB, umfasst.

10. Spikendes neuronales Netzwerk, SNN (360, 520, 620), das durch das Verfahren (100) nach einem der vorstehenden Ansprüche erhalten wird.

11. SNN (360, 520, 620) nach Anspruch 10, wobei das SNN in einem feldprogrammierbaren Array, FPGA oder in neuromorpher Hardware implementiert ist.

12. Ereignisbasiertes Bildgebungssystem (500, 600, 710) zum Charakterisieren und/oder Vorhersagen einer Bewegung eines Objekts (370, 660) in der Umgebung des ereignisbasierten Bildgebungssystems (500, 600, 710), das ereignisbasierte Bildgebungssystem (500, 600, 710) umfassend:
einen ereignisbasierten Sichtsensor, EVS (210, 310, 510, 610), der konfiguriert ist, um Ereignisdaten (350, 640) des Objekts (370, 660) in der Umgebung des ereignisbasierten Bildgebungssystems (500, 600, 710) bereitzustellen; und
das spikende neuronale Netzwerk, SNN (360, 520, 620), nach Anspruch 10 oder 11 zum Charakterisieren und/oder Vorhersagen der Bewegung des Objekts (370, 660) basierend auf den Ereignisdaten (350, 640).

13. Ereignisbasiertes Bildgebungssystem (500, 600, 710) nach Anspruch 12, wobei das SNN (360, 520, 620) mehrere Schichten umfasst, einschließlich einer Eingabeschicht (424), die konfiguriert ist, um:
die Ereignisdaten zu empfangen (350, 640); und
eine Ausgabe, die angebend für die Ereignisdaten (350, 640) ist, sofort an eine andere Schicht (426) bereitzustellen, wenn die Eingabeschicht (424) die Ereignisdaten (350, 640) empfängt.

14. Ereignisbasiertes Bildgebungssystem (500, 600, 710) nach Anspruch 12 oder 13, wobei der EVS (210, 310, 510, 610) konfiguriert ist, um die Ereignisdaten (350, 640) gemäß dem Address-Event-Representation, AER,-Protokoll zu verarbeiten, um die Ereignisdaten (350, 640) an das SNN (360, 520, 620) bereitzustellen, und wobei das SNN (360, 520, 620) konfiguriert ist, um die Ereignisdaten (350, 640) gemäß dem AER-Protokoll zum Charakterisieren und/oder Vorhersagen der Bewegung des Objekts (370, 660) zu verarbeiten.

15. Ereignisbasiertes Bildgebungssystem (600) nach einem der Ansprüche 12 bis 14, wobei das ereignisbasierte Bildgebungssystem (600) ferner einen Referenzsensor (630) zum Trainieren des SNN (620) umfasst.

16. Trainingssystem (200, 300) zum Erstellen eines spikenden neuronalen Netzwerks, SNN (360, 520, 620), das konfiguriert ist, um eine Bewegung eines Objekts (370, 660) in der Umgebung eines ereignisbasierten Bildgebungssystems (500, 600, 710) zu charakterisieren und/oder vorherzusagen, das Trainingssystem (200, 300) umfassend:
einen ereignisbasierten Sichtsensor, EVS (210, 310, 510, 610), der konfiguriert ist, um Ereignisdaten (350, 640) des Objekts (370, 660) in der Umgebung des ereignisbasierten Bildgebungssystems (500, 600, 710) bereitzustellen;
einen Referenzsensor (220, 320, 630), der konfiguriert ist, um Bewegungsdaten (330, 650) des Objekts (370, 660) bereitzustellen;
**dadurch gekennzeichnet, dass** das System ferner umfasst:
ein künstliches neuronales Netzwerk, ANN (230, 340), das konfiguriert ist zum Trainieren des ANN (230, 340), um die Bewegung des Objekts (370, 660) basierend auf den Ereignisdaten (350, 640) und den Bewegungsdaten (330, 650) zu charakterisieren und/oder vorherzusagen, und zum Erstellen des SNN (360, 520, 620), basierend auf dem ANN (230, 340), zum Charakterisieren und/oder Vorhersagen der Bewegung des Objekts (370, 660).

17. Trainingssystem (200, 300) nach Anspruch 16, wobei der Referenzsensor (220, 320, 630) eine RGB-Kamera (320, 630), einen LiDAR-Sensor, einen RADAR-Sensor, einen Infrarotsensor und/oder einen Ultraschallsensor umfasst.

18. Fahrzeug, Drohne oder Robotersystem (700), umfassend das ereignisbasierte Bildgebungssystem (710) nach einem der Ansprüche 12 bis 15.

## Revendications

1. Procédé (100) pour un système d'imagerie basé sur un événement (500, 600, 710), le procédé comprenant :
l'obtention (110) de données d'événement (350, 640) d'un objet (370, 660) dans l'environnement du système d'imagerie basé sur un événement (500, 600, 710) à l'aide d'un capteur de vision basé sur un événement, EVS (210, 310, 510, 610) ;
l'obtention (120) de données de mouvement (330, 650) de l'objet (370, 660) à l'aide d'un capteur de référence (220, 320, 630) ;
**caractérisé en ce que** le procédé comprend en outre l'application (130) des données d'événement (350, 640) et des données de mouvement (330, 650) pour entraîner un réseau neuronal artificiel, ANN (230, 340), afin de caractériser et/ou de prédire un mouvement de l'objet (370, 660) ; et
la création (140), sur la base de l'ANN entraîné (230, 340), d'un réseau neuronal à impulsions, SNN (360, 520, 620), configuré pour caractériser et/ou prédire le mouvement de l'objet (370, 660).

2. Procédé (100) selon la revendication 1, dans lequel le capteur de référence (220, 320, 630) comprend une caméra RVB (320, 630), un capteur LiDAR, un capteur RADAR, un capteur infrarouge et/ou un capteur à ultrasons.

3. Procédé (100) selon la revendication 1 ou 2, dans lequel la création (140) du SNN (360, 520, 620) comprend le remplacement d'une fonction d'activation de l'ANN (230, 340) par un neurone d'intégration et de déclenchement à fuite, LIF.

4. Procédé (100) selon l'une quelconque revendication précédente, dans lequel la création (140) du SNN (360, 520, 620) comprend la mise en œuvre du SNN (360, 520, 620) dans un réseau prédiffusé programmable par l'utilisateur, FPGA, ou dans un matériel neuromorphique.

5. Procédé (100) selon l'une quelconque revendication précédente, dans lequel l'obtention (120) des données de mouvement (330, 650) comprend :
l'obtention des données de mesure de l'objet (370, 660) à partir du capteur de référence (220, 320, 630) ; et
l'obtention des données de mouvement (330, 650) à l'aide d'un filtre de Bayes et des données de mesure comme entrée dans le filtre de Bayes.

6. Procédé (100) selon la revendication 5, dans lequel l'obtention (120) des données de mouvement (330, 650) comprend en outre :
l'obtention d'échantillons de mouvement en appliquant le filtre de Bayes aux données de mesure ;
la détermination d'une incertitude des échantillons de mouvement ; et
le filtrage des échantillons de mouvement sur la base de l'incertitude pour obtenir les données de mouvement (330, 650).

7. Procédé (100) selon la revendication 6, dans lequel l'incertitude des échantillons de mouvement est représentée par une distance de Mahalanobis des échantillons de mouvement, et dans lequel le filtrage des échantillons de mouvement comprend l'élimination d'échantillons de mouvement présentant une distance de Mahalanobis qui est supérieure à un seuil prédéfini.

8. Procédé (100) selon l'une quelconque revendication précédente, dans lequel le calcul comprend :
l'obtention de données d'événement supplémentaires (640) à l'aide de l'EVS (610) ;
l'obtention de données de mouvement supplémentaires (650) à l'aide du capteur de référence (630) ;
la fourniture des données d'événement (640) et des données de mouvement (650) au SNN (620) ; et
l'entraînement du SNN (620) sur la base des données d'événement supplémentaires (640) et des données de mouvement supplémentaires (650) fournies au SNN (620).

9. Procédé (100) selon la revendication 8, dans lequel l'entraînement du SNN (620) comprend l'entraînement du SNN à l'aide de la rétropropagation dépendant d'une synchronisation de pointe, STDB.

10. Réseau neuronal à impulsions, SNN (360, 520, 620), obtenu par le procédé (100) selon l'une quelconque des revendications précédentes.

11. SNN (360, 520, 620) selon la revendication 10, dans lequel le SNN est mis en œuvre dans un réseau prédiffusé programmable par l'utilisateur, FPGA, ou dans un matériel neuromorphique.

12. Système d'imagerie basé sur un événement (500, 600, 710) permettant de caractériser et/ou de prédire un mouvement d'un objet (370, 660) dans l'environnement du système d'imagerie basé sur un événement (500, 600, 710), le système d'imagerie basé sur un événement (500, 600, 710) comprenant :
un capteur de vision basé sur un événement, EVS (210, 310, 510, 610), configuré pour fournir des données d'événement (350, 640) de l'objet (370, 660) dans l'environnement du système d'imagerie basé sur un événement (500, 600, 710) ; et
Réseau neuronal à impulsions, SNN (360, 520, 620), selon la revendication 10 ou 11 pour caractériser et/ou prédire le mouvement de l'objet (370, 660) sur la base des données d'événement (350, 640).

13. Système d'imagerie basé sur un événement (500, 600, 710) selon la revendication 12, dans lequel le SNN (360, 520, 620) comprend de multiples couches multiples comportant une couche d'entrée (424) qui est configurée pour :
recevoir les données d'événement (350, 640) ; et
fournir une sortie indiquant les données d'événement (350, 640) à une autre couche (426) immédiatement après que la couche d'entrée (424) reçoit les données d'événement (350, 640).

14. Système d'imagerie basé sur un événement (500, 600, 710) selon la revendication 12 ou 13, dans lequel l'EVS (210, 310, 510, 610) est configuré pour traiter les données d'événement (350, 640) selon le protocole de représentation d'événement d'adresse, AER, pour fournir les données d'événement (350, 640) au SNN (360, 520, 620), et dans lequel le SNN (360, 520, 620) est configuré pour traiter les données d'événement (350, 640) selon le protocole AER pour la caractérisation et/ou la prédiction du mouvement de l'objet (370, 660).

15. Système d'imagerie basé sur un événement (600) selon l'une quelconque des revendications 12 à 14, dans lequel le système d'imagerie basé sur un événement (600) comprend en outre un capteur de référence (630) pour entraîner le SNN (620).

16. Système d'entraînement (200, 300) permettant de créer un réseau neuronal à impulsions, SNN (360, 520, 620), configuré pour caractériser et/ou prédire un mouvement d'un objet (370, 660) dans l'environnement d'un système d'imagerie basé sur un événement (500, 600, 710), le système d'entraînement (200, 300) comprenant :
un capteur de vision basé sur un événement, EVS (210, 310, 510, 610), configuré pour fournir des données d'événement (350, 640) de l'objet (370, 660) dans l'environnement du système d'imagerie basé sur un événement (500, 600, 710) ;
un capteur de référence (220, 320, 630) configuré pour fournir des données de mouvement (330, 650) de l'objet (370, 660) ;
**caractérisé en ce que** le système comprend en outre :
un réseau neuronal artificiel, ANN (230, 340), configuré pour entraîner l'ANN (230, 340) à caractériser et/ou à prédire le mouvement de l'objet (370, 660) sur la base des données d'événement (350, 640) et des données de mouvement (330, 650) et pour créer, sur la base de l'ANN (230, 340), le SNN (360, 520, 620) afin de caractériser et/ou de prédire le mouvement de l'objet (370, 660).

17. Système d'entraînement (200, 300) selon la revendication 16, dans lequel le capteur de référence (220, 320, 630) comprend une caméra RVB (320, 630), un capteur LiDAR, un capteur RADAR, un capteur infrarouge et/ou un capteur à ultrasons.

18. Véhicule, drone ou système robotique (700) comprenant le système d'imagerie basé sur un événement (710) selon l'une quelconque des revendications 12 à 15.
